# EUROPEAN PATENT SPECIFICATION

(11) **EP 3 110 727 B1**
(45) Date of publication and mention of the grant of the patent: **02.05.2018**
(21) Application number: 15712440.5
(22) Date of filing: 27.02.2015
(51) Int. Cl.: B65G 39/071, B65G 39/16

(54) **BELT CONVEYOR ASSEMBLY**
BANDFÖRDERANORDNUNG
ASSEMBLAGE DE TRANSPORTEUR À COURROIE

(30) Priority: 27.02.2014 NL 1040690
(43) Date of publication of application: 04.01.2017
(73) Proprietor: Guide2track S.àr.l, 2738 Luxembourg (LU)
(72) Inventor: CLERX, Franciscus Antonius Petrus, 5912 CN Venlo (NL); CLERX, Henricus Petrus Maria, 5912 CN Venlo (NL)
(74) Representative: EDP Patent Attorneys B.V.
(86) International application number: PCT/NL2015/050123
(87) International publication number: WO 2015/130171

(56) References cited:
- FR-A- 1 530 195
- NL-A- 9 402 031

## Description

### Field of the invention

The present invention relates to a belt conveyor assembly which assembly comprises measures for preventing the conveyer belt to move in a direction transverse to the conveying direction of the conveyor belt.

### Background of the Invention

A belt conveyor assembly according to the preamble of claim 1 is known from the Dutch patent NL9402031. Further, US2013/0284567 describes a positioning and/or transfer assembly comprising: (i) an endless conveyor belt consisting of a conveying part for carrying an object and a return part; (ii) a first and a second roller arranged inside the endless conveyor belt, each roller having a first and second end; (iii) a frame; (iv) a mounting system comprising a first mounting part mounting the first end of the first roller rotatably to the frame, a second mounting part mounting the second end of the first roller rotatably to the frame, a third mounting part mounting the first end of the second roller rotatably to the frame, and a fourth mounting part mounting the second end of the second roller rotatably to the frame; wherein a length direction of the conveyor belt is defined by the conveying direction of the conveyor belt and extends transverse to the rotational axis of the first and second roller; wherein at least one of the first and second mounting part comprises a first tensioning system arranged for tensioning the conveyor belt in said length direction; and wherein the first and second end of the first roller are moveable relative to each other in said length direction by the first tensioning system in response to a difference in length and/or in belt tension between the longitudinal edges of the conveyor belt.

### Summary of the Invention

To create a belt conveyor assembly wherein the belt does not, or only in a very limited extend, moves in a transverse direction, the guide roller (or pulley) of the belt conveyor assembly and the associated second support must be arranged exactly parallel to each other. If these components of the belt conveyor assembly are not arranged exactly parallel, the conveyor belt may move in the direction transverse to the conveying direction. Eventually the belt will contact structural components and will be damaged, which often may result in stagnation of the production.

In the majority of the belt conveyor assemblies according to the prior art, attempts are made to prevent the conveyor belt to move transversely to the conveying direction by applying various self-tracking methods including the use of crowned pulleys or rollers (herein the terms "pulley" and "roller" are used interchangeably). However, these tracking methods, practically, show several disadvantages. Hence, tracking systems for conveyor belts, wherein, if the driving roller and / or the tail pulley are positioned obliquely the conveyor belt moves spiral-wise in axial direction over the surface of the roller to the end of a roller, appear to provide problems that must be solved. The Dutch patent NL9402031 intends to obviate the above-mentioned disadvantages. However, also the solution according to the above-mentioned Dutch patent still has disadvantages.

Accordingly, it is an objective of the invention, to provide an alternative belt conveyor assembly, which preferably does not comprise the above-mentioned disadvantages. An opportunity to obviate the above-mentioned disadvantages may be achieved by configuring the roller surface of the guide roller from a plurality of axially movable segments, and by maintaining a correctly aligned belt by means of side guides. To increase the stiffness of a segment, and hence to increase the resistance to deflection, a segment may be provided with at least one rib in the axial direction of the guide roller extending from the inner surface of the segment. Generally the conveyor belt will move transversely in the direction where the center distance between the axles of the two rollers is smallest, when the position of the two rollers deviates from mutually exactly parallel. A segment that is axially displaced and is located in the arc of contact (between the segment and the conveyor belt), will have to return to the original position, hereinafter also referred to as "middle position" or "zero position", as soon as it is (resulting from the rotation of the guide roller) no longer located in the arc of contact. Returning to the middle position, may also be referred to as "resetting".

Resetting may be realized by means of two methods, specifically by applying one or more spring-loaded elements, or by the use of guidance means. The spring-loaded elements may comprise springs, including, for example leaf springs or coil springs, or may comprise elements of e.g. rubber, foam rubber or any other elastically deformable material. The use of guidance means is preferred since this method results in lower lateral forces onto the conveyor belt. The segments have to be moved axially against the spring pressure when applying internal spring-loaded elements, requiring friction between the segment and the conveyor belt, and resulting in a large force in the plane of the conveyor belt and on the side guide of the conveyor belt. Such a large lateral force may be highly detrimental to the life of the conveyor belt. For example, to promote a good heat transfer to the snacks, polyester conveyor belts used in snack ovens often have a thickness of only about 0.1 mm. Large lateral forces are detrimental to such a conveyor belt. A similar problem may occur with plastic films and paper webs in printing newspapers. Hence, when the term "belt" is used in the specification or in the claims, the term may also refer to a belt made up from the material conveyed.

For fast-rotating rollers, inertia of the segments has a negative effect. Once a displaced segment is no longer in the arc covered by the conveyor belt (the arc of contact), the spring-loaded element must reset the segment to the middle position prior to the moment the segment returns to the arc of contact. This requires a greater spring force of the spring-loaded elements, which in turn is unfavorable for the axial movement of the segment when it makes part of the arc of contact. To overcome this force a larger friction force is required between the segment and the conveyor belt. The resulting reaction force acts via the conveyor belt (in the plane of the belt) on the (belt) side guide, being particularly disadvantageous. The arc of contact may be defined as that part (or circular sector) of the roller which is covered by the conveyor belt. Often, this arc will be about 180°.

A second adverse effect of an increased spring force of the spring-loaded elements results from the inertia, viz. the overshoot of the segment over the middle position, after which the segment ends-up eccentrically instead of centered in the "nip" (the line of contact (substantially parallel to the roller axle) between belt and roller, at the location where the belt comes in contact with the roller). Depending on the ratio of the inertia of a segment and the speed of the guide roller, the segment may bounce oscillating and enter the nip eccentrically, further increasing the axial offset. Consequently, the spring-loaded elements and the conveyor belt may be overloaded. A third disadvantage is related to the fatigue forces on the spring-loaded elements that may lead to rupture and as a result loss of production. Using foam rubber spring-loaded elements may not provide a solution, since the aging of the foam rubber, resulting in a loss of resilience, takes place relatively fast. Spring-loaded elements, therefore, have to be replaced on a regular basis, resulting in a loss of production.

The present invention provides a solution to the above-described drawbacks of the known guide roller. Additionally, other characteristics are provided, eliminating drawbacks of state of art belt conveyor assemblies. Hence, the invention provides a belt conveyor assembly comprising a guide roller, with a roller axle, wherein the roller surface is composed of a number of axially movable segments distributed over the circumference of the roller surface and secured from rotating around the roller axle, wherein the belt conveyor assembly comprises a reset element (especially configured for resetting a segment), and the guide roller especially comprises a number of shafts, wherein each segment of the guide roller is connected to one or more shafts ("segment shaft" or "ball bushing shaft"), and wherein the guide roller comprises ball bushings for engaging the shafts, as is further defined in the accompanying claims. In this way, the segments and the ball bushings are functionally connected. Furthermore, in this way, a surprisingly smooth resetting of the segments is obtained. The term "connected", for example, may refer to elements that are directly connected to each other, but it also may refer to elements that are connected to each other via one or more other elements. The term "connected" especially means "functionally coupled". In an embodiment, the segments can not move independently with respect to the shafts, and the segments have a-limited-one-dimensional degree of freedom to move in the ball bushings. In another embodiment, the segments can not move independently of the ball bushings, and the segments and the ball bushings have a-limited-one dimensional degree of freedom to move with respect to the shaft. Both above-described embodiments enable a translation of a segment in relation to the guide roller axle. A further embodiment, provides the belt conveyor assembly, characterized in that the reset element comprises an inflected or a curved strip (that also may comprise a block comprising an inflected or curved plane), and especially, characterized in that the reset element is arranged outside of the guide roller. In this way, the segment may be reset, when it is located outside the arc of contact. In yet a further embodiment, the belt conveyor assembly is provided, characterized in that the segments comprise at least a first length and a second length in axial direction, wherein the first length is larger than the second length, and characterized in that the reset element is arranged outside of the guide roller. Especially, a segment may comprise an obliquely angled (or beveled) side. In yet a further embodiment, (hence) a belt conveyor assembly is provided, characterized in that the belt conveyor assembly comprises a guide roller with, especially, three segments, especially, three segments each substantially comprising one third part of the circumference and the surface of the guide roller, and even more especially three oblique angled (or beveled) segments, and characterized in that the reset element is arranged outside of the guide roller. In yet another embodiment, the segments especially comprise an obliquely angled (or beveled) end and an obliquely angled (or beveled) beginning. The terms "beginning" and "end" may also be indicated with the upstream side or downstream side (or vice versa). In another embodiment a belt conveyor assembly is provided, wherein the belt conveyor assembly comprises a cylinder configured as conveyer belt side guide, wherein the cylinder comprises a bearing, especially wherein the bearing of the cylinder comprises a ball bearing, and wherein the cylinder is rotatable around an axis substantially perpendicular to the surface of the conveyer belt. In another embodiment a belt conveyor assembly is provided, wherein the belt conveyor assembly comprises spring-loaded strips, arranged substantially perpendicular to the surface of the conveyor belt, configured as conveyer belt side guides. In yet another embodiment, a belt conveyer unit is provided, wherein the belt conveyor assembly comprises non rotatable pins arranged substantially perpendicular to the surface of the conveyor belt, configured as conveyer belt side guides. In an embodiment, a belt conveyer unit is provided, wherein the conveyer belt side guides especially further comprise spring-loaded elements. In a further embodiment, a belt conveyor assembly is provided with conveyer belt side guides, wherein the conveyer belt side guides are located at both sides of a curved section of the conveyor belt, especially at the location of the arc of contact of the guide roller. In yet a further embodiment, a belt conveyor assembly is provided, characterized in that each segment of the guide roller comprises one or more to the concave side of the segment immovably connected guide blocks provided with one or more in axial direction extending bore holes, especially two mutually parallel in axial direction extending bore holes, wherein the segment is axially movably incorporated in the guide roller by means of one or more, especially two, (especially hardened) shafts arranged in the one or more in axial direction extending bore holes in the one or more guide blocks. In a further embodiment, a conveyor belt assembly is provided, characterized in that the conveyor belt assembly comprises a tensioning device centrally engaging a guide roller, especially a tensioning device comprising a bracket and a lever mechanism, and especially characterized in that the tensioning device comprises a spring-loaded tensioner or a spring balance. In a further embodiment a belt conveyer unit is provided, characterized in that the guide roller comprises ball bushings for engaging of the hardened shafts. Examples of ball bushings are linear ball bearings, etc., such as, for example, available from SKF. In yet a further embodiment, belt conveyor assembly is provided, comprising a reversing roller with a roller axle, wherein the roller surface is composed of a number of axially movable segments distributed over the circumference of the roller surface, characterized in that the belt conveyor assembly comprises a reset element configured to reset a segment (of the reversing roller). The guide roller may especially be configured as a driving roller. Embodiments, as described herein, with respect to the guide roller also generally apply to the reversing roller (or for example, a tensioning roller, or support roller). In a specific embodiment, a belt conveyor assembly is provided, wherein one or more segments of the guide roller, comprises an (aluminum) extruded segment. In yet another embodiment, a conveyor belt assembly is provided, wherein one or more segments of the guide roller comprise an element (herein also referred to as "ridge element") over at least a part of the width of the segment at the side of the segment facing the roller axle and directed towards the roller axle, wherein the reset element and the (ridge) element are configured to reset the segment when the (ridge) element rotates along the reset element. In a further embodiment, a belt conveyor assembly is provided, wherein the reset element and the segment are configured to provide in a first condition the reset element and the segment not contacting each other, and in a second condition the reset element and the segment contacting each other, especially wherein the reset element only touches the ridge element, and wherein from one condition to the other condition is switched by rotation of the guide roller around the roller axle. During rotation a displaced segment may then be reset again by a touch of the element (ridge element). In another embodiment, which especially may be combined with the preceding embodiment, a belt conveyor assembly is provided, wherein in the second condition, the reset element, or the ridge element, or both the reset element and the ridge element comprise a contact surface comprising an angle larger than (or equal to) 0° and smaller than 180° degrees relative to a plane of rotation. In a further embodiment, the belt conveyor assembly is further configured so that in the second condition, the reset element, or the ridge element, or both the reset element and the ridge element comprise a contact surface comprising an angle larger than 0° and smaller than 180° degrees relative to a plane through the guide roller axle. Yet a further embodiment provides a belt conveyor assembly, wherein the reset element is at least partially arranged inside the guide roller.

### Detailed Description of the invention

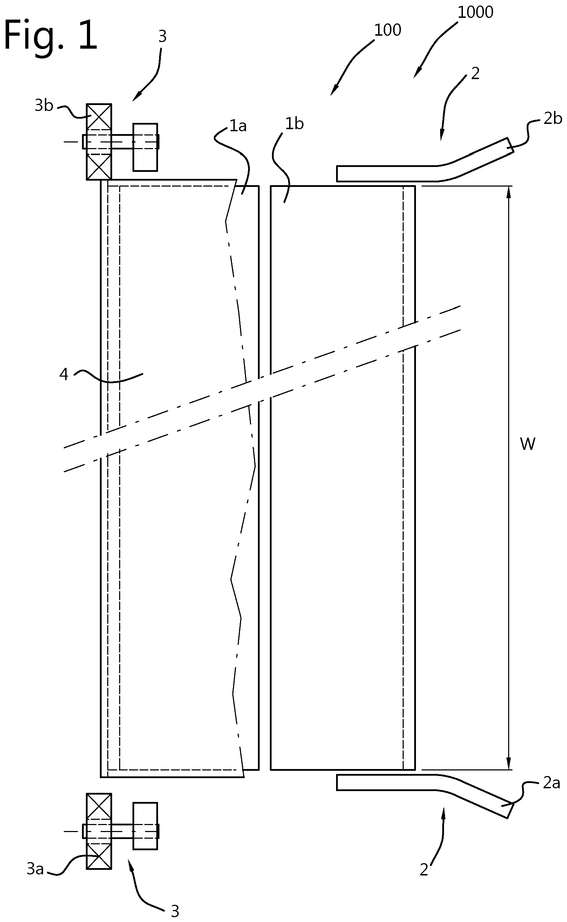

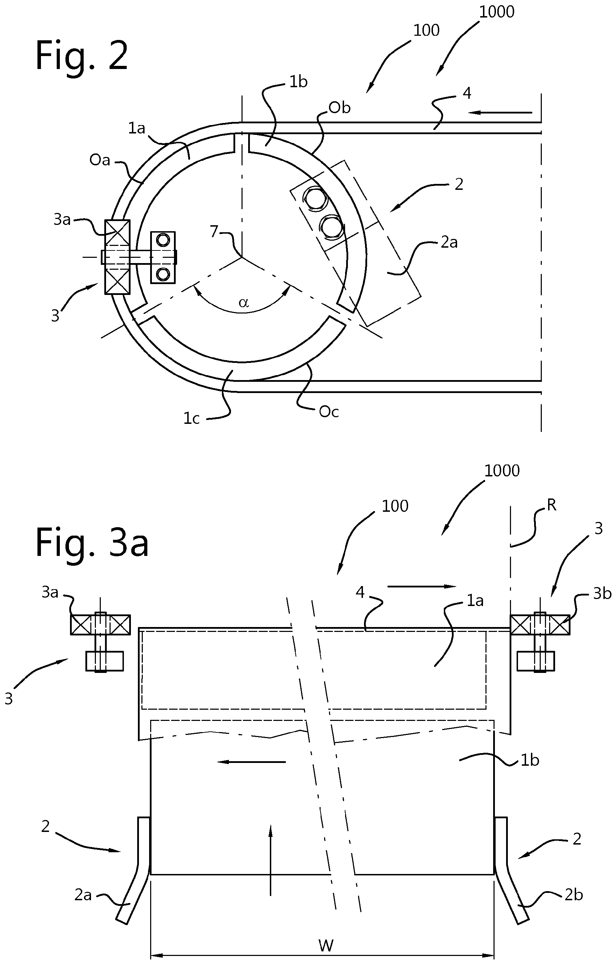

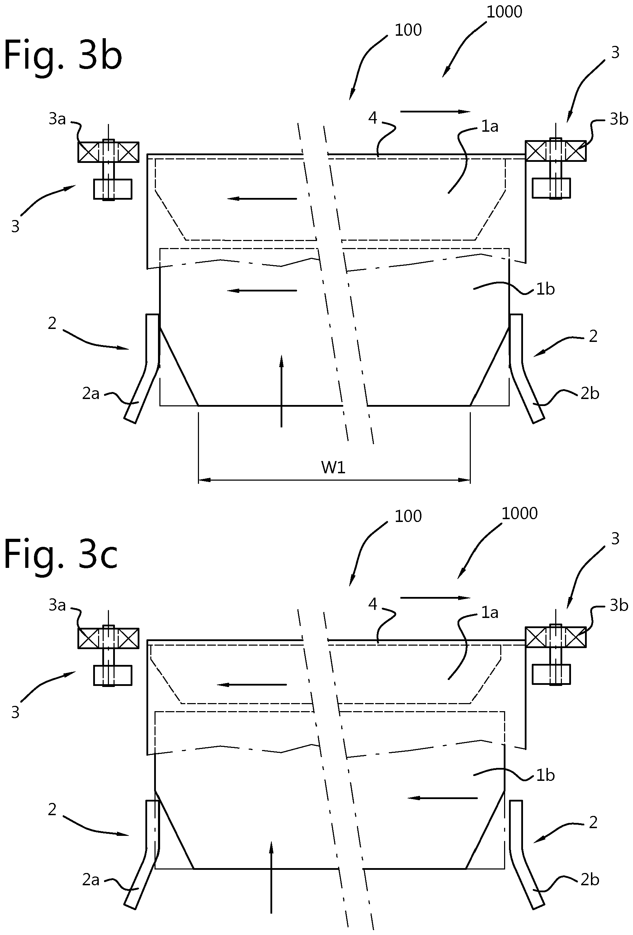

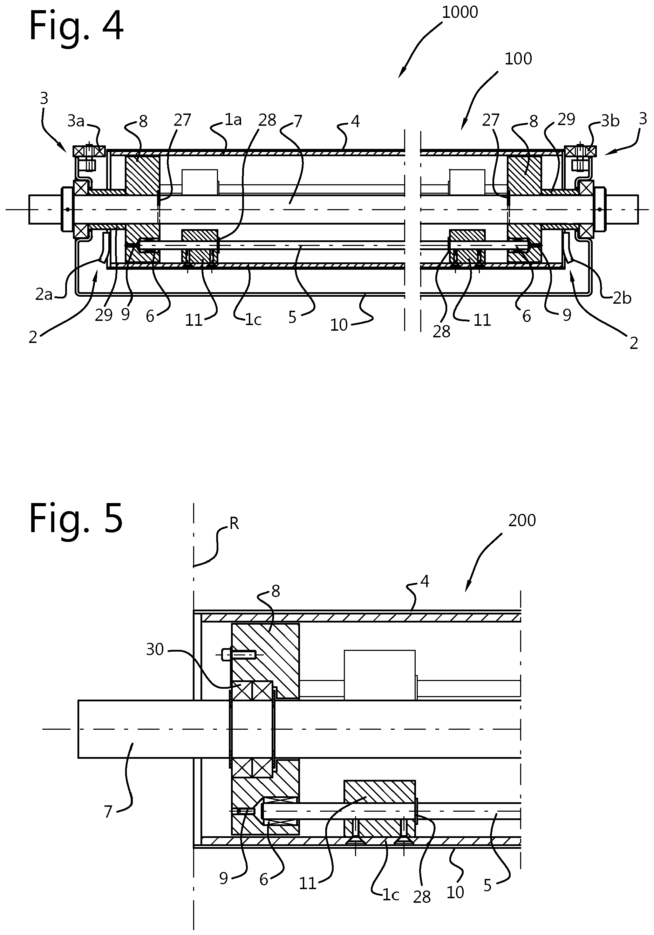

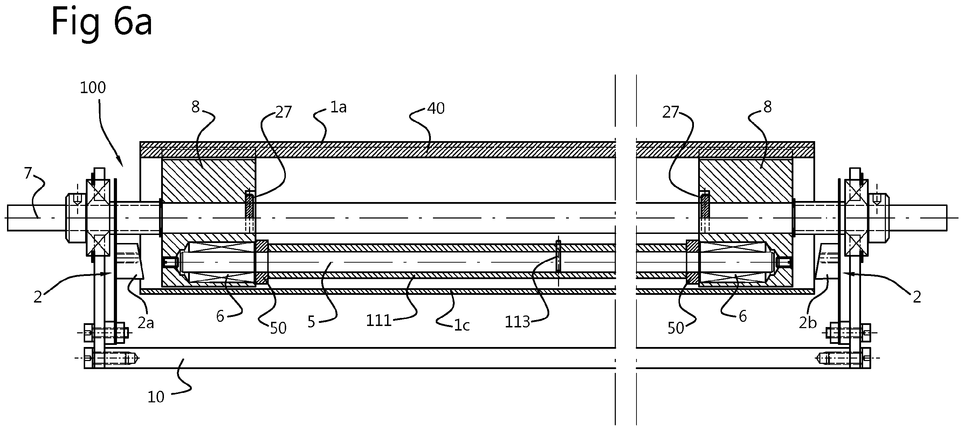

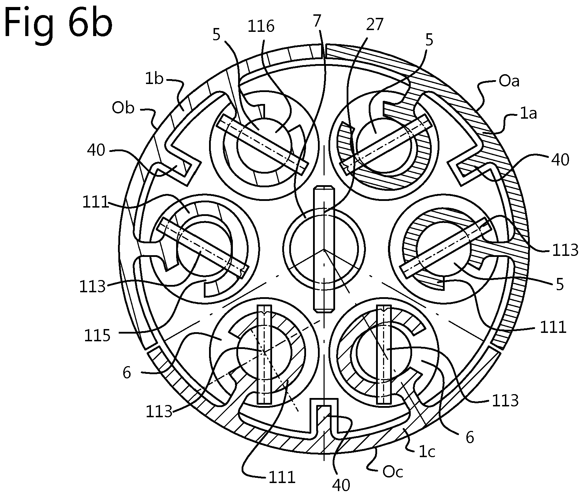

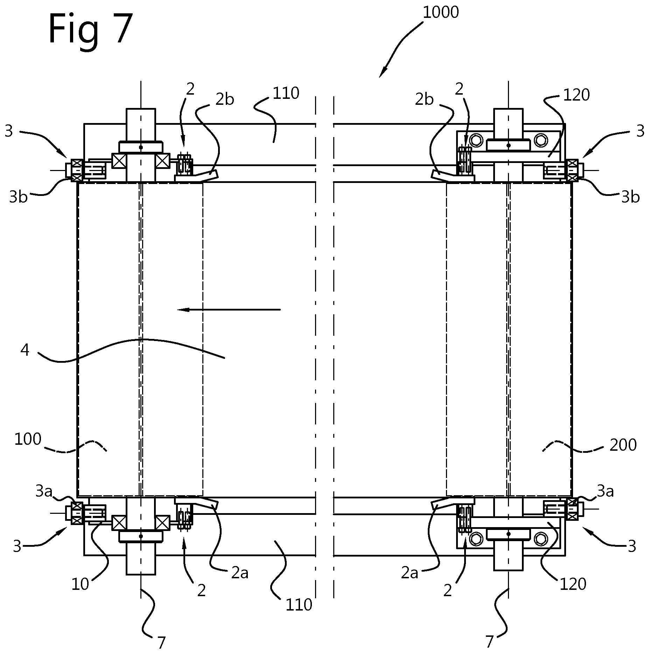

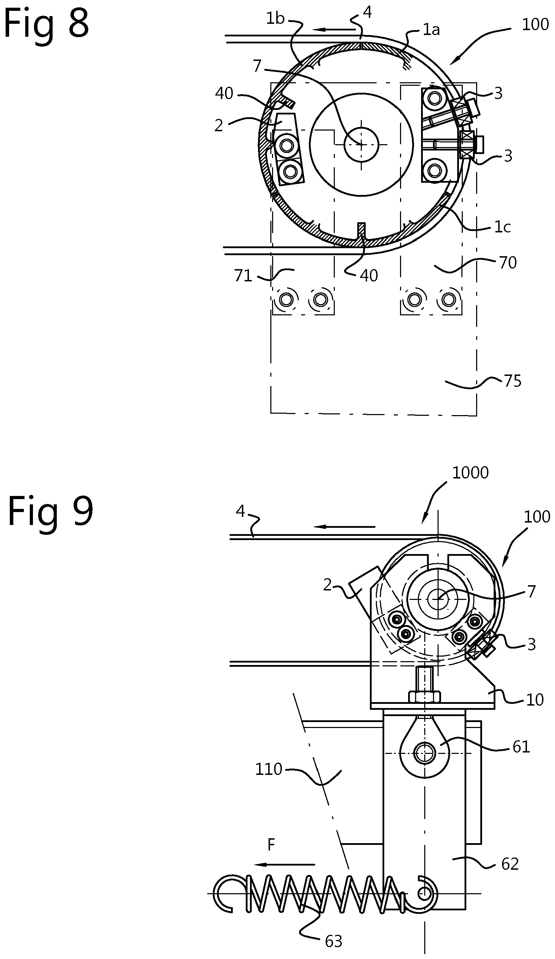

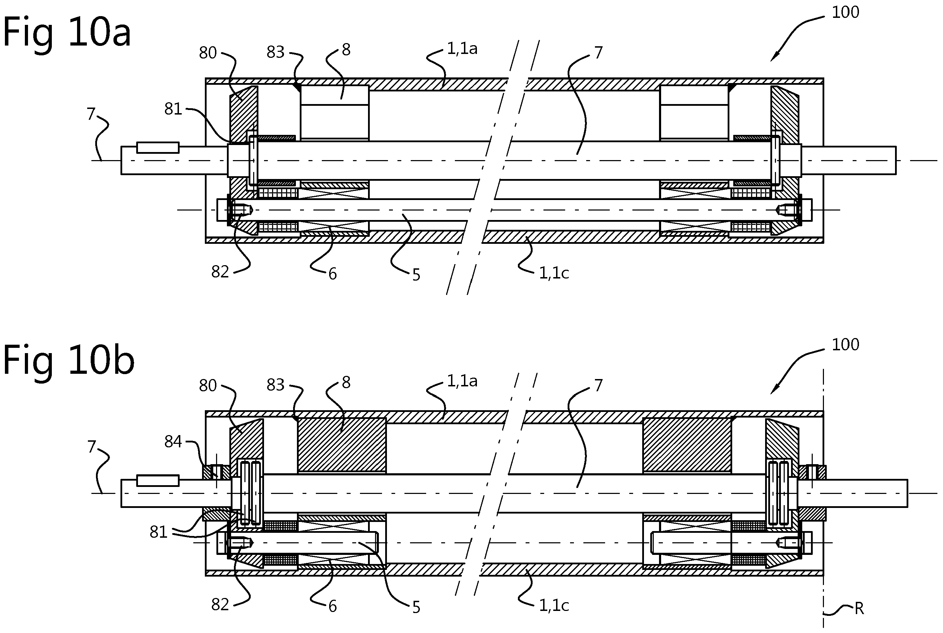

The invention will now be discussed with reference to some figures, wherein fig. 1 schematically depicts a top view of an embodiment of a part of a belt conveyor assembly according to the invention; fig. 2 schematically depicts a side view of the in fig 1. (in top view) depicted part of a belt conveyor assembly according to the invention; fig. 3a schematically depicts a top view of an embodiment of a part of a conveyor belt assembly comprising a guide roller with rectangular segments and reset elements; fig. 3b schematically depicts a top view of an embodiment of a part of a conveyor belt assembly comprising a guide roller with obliquely angled (or beveled) segments and reset elements; fig. 3c schematically depicts a top view of the assembly depicted in fig. 3b in which the guide roller is slightly rotated with respect to the position depicted in fig. 3b; fig. 4 schematically depicts an embodiment of a segmented driving roller according to the invention; fig. 5 schematically depicts an embodiment of a segmented part of a reversing roller according to the invention; fig. 6a and 6b schematically depict an embodiment of the roller according to the invention; fig. 7 schematically depicts an overview of a part of the belt conveyor assembly according to the invention; fig. 8 schematically depicts some elements of the invention; fig. 9 schematically depicts an embodiment of an assembly provided with a tensioning device; figs. 10a and 10b schematically depict a representation of an embodiment of the roller according to the invention. In the figures and in the specification, identical or comparable parts have the same or similar reference numerals. The figures are not necessarily to scale. In different figures, the direction of the belt 4 is indicated with an arrow.

Fig. 7 schematically depicts a part of the belt conveyor assembly according to the invention. The belt conveyor assembly 1000 comprises a frame 110 in which at least a first guide roller 100 according to the invention (especially configured as a driving roller), and a second support means, such as a second guide roller configured as a reversing roller 200, and possibly a support roller (not shown in fig. 7) are arranged, guiding the conveyor belt 4, which is moving in the direction indicated by the arrow. The reset elements 2 (2a, 2b) in combination with the side guides 3 (3a and 3b) prevent running of the conveyor belt 4 in a direction transverse to the transport direction. In this embodiment, both the reset elements and the side guides are connected to bracket 10 arranged at the frame 110. Although the guide roller axle 7 of the guide roller 100 is arranged in the frame 110 transversely to the conveying direction of the conveyor belt 4, in practice, the configuration always slightly deviates from the direction transversely to the conveying direction.

The rolling surface of a guide roller 100 (and of a support roller and a reversing roller 200) according to the invention is configured from a plurality of segments 1, that can rotate relative to, or together with, the guide roller axle 7, and, moreover, are able to move parallel to it in the axial direction. Especially in a guide roller 100 configured as a driving roller, the segments will be secured from rotating around the guide roller axle 7 and hence rotate together with the axle.

A reversing roller and a support roller may be configured either to enable the roller to rotate with respect to a fixed axle, or to rotate along with the axle and hence to secure the segments from rotation around the roller. In the reversing roller 200 shown in fig. 7, the guide roller 7 is arranged statically and fixated to the frame 110 via bracket 120.

Based on the fact that the center distance between two rollers of the conveyor belt assembly 1 over the length of the roller is not always constant, and the rollers, thus, are not positioned mutually parallel, the belt 4 (may) move in a transverse direction, especially in the direction having the smallest center distance between the rollers. The belt 4 will eventually abut against one of the side guides (3a, 3b); in a guide roller with a conventional rolling surface, the belt 4 will then bend upward at the location of the contacted side guide and eventually will creep over this side guide, resulting in slippage and strong belt wear. However, with a guide roller 100 according to the invention, and, as described above provided with a number of axially movable segments 1 distributed over the circumference of the guide roller 100 , wherein the outer surfaces of the segments jointly form the rolling surface, the belt 4 will be held between the side guides 3, wherein the belt will move the segments 1 (the segment the belt contacts at that moment) in the opposite direction (away from the side guide 3 the belt abuts at that moment). Obviously, this movement will stop when a displaced segment no longer contacts the belt. The segment 1 concerned will than be set back in its starting position by means of the reset elements 2.

Fig. 1 schematically depicts a top view of an embodiment of a part of a conveyor belt assembly 1000 according to the invention, in which the guide roller 100 comprises segments 1, distributed over the circumference of the roller surface, and independently from each other in axial direction movable, and secured from rotating around the roller axle. In this embodiment, the guide roller is especially configured as a driving roller wherein it is desirable that rotation of the guide roller axle results in rotation of the secured segments. Since, during use, the conveyor belt 4 of this system can not move axially, the segments will be displaced in the axial direction. Where in this specification and in the claims, the term "conveyor belt" or "belt" is used, it may also refer to, for example, a web of paper, plastic or fabric. It is also noted that the belt may comprise any conventional material used for conveyor belts, such as a plastic, a fabric, and steel, and therefore, may be configured thin (flexible) as well as thick (rigid).

In contrast to the preferred embodiments of the guide roller in accordance with the state of the art as described in the Dutch patent NL9402031, the guide roller according to the present invention comprises in preferred embodiments only three of such segments, each comprising substantially a third part (120°) of the circumference of the guide roller. Parts of a first segment 1a and a part of a second segment 1b are visible in the depicted top view.

Also referring to fig. 2, the total outer circumference of the (three) segments is especially at least 75%, such as at least 80%, more especially at least 90% of the outer circumference of the guide roller configured from these (three) segments, such as in the range of 95-99%. The circumference of the individual segments is indicated by the references Oa, Ob, and Oc. The shortest distance between two segments may, therefore be, respectively, of the order of 10% / n, such as of the order of (1-5%) / n, where n is the number of segments, especially being in the range of 3-5, such as 3-4, especially 3 for the guide roller and / or the reversing roller, whereas for the support roller, for example, n may only need to be 2. Individual segments are indicated by 1a, 1b, .....

The maximum width of the segments (that is, the transversal width or the width parallel to the axle of the rollers) is denoted by reference W.

Furthermore, the belt conveyor assembly comprises at a first end face of the conveyer belt guide roller 100, further also referred to as guide roller 100, a first segment reset element 2a, further in this description and in the claims, also referred to as reset element 2a, and to a second end face of the guide roller, a second reset element 2b, to return a segment into the central position. In a preferred embodiment, a reset element 2 comprises an inflected or curved strip. In the description and in the claims, the terms 'inflected strip" or "curved strip" may also refer to embodiments of the reset element not produced from a strip but having a similar shape enabling to function as the inflected strip in resetting an axially displaced segment to the middle position. Thus, the belt conveyor assembly 1000 comprises a guide roller 100, with a guide roller axle 7, wherein the roller surface is composed of a number of axially movable segments 1 (1a, 1b, 1c), distributed over the circumference of the roller surface and preferably secured from rotating around the roller axle, characterized in that the belt conveyor assembly comprises a reset element 2a, 2b. The guide roller is hereby configured especially as a driving roller and can be combined also advantageously in the belt conveyor assembly with a second (or further) guide roller, whereby it can be advantageous to configure the second (and third, etc.) roller without securing the segments to the guide roller axle, so that the segments can freely rotate around the guide roller axle.

In an embodiment, the conveyor belt assembly 1000 (further) comprises a (second) guide roller 100, with a guide roller axle 7, wherein the roller surface is composed of a number of axially movable segments 1 distributed over the circumference thereof, characterized in that the conveyor belt assembly comprises a reset element 2a, 2b.

Fig. 1, further, depicts a first belt side guide 3a and a second belt side guide 3b. Eventually, at one side or at both sides more than one belt side guide respectively 3a, 3b may be configured. For example, two or more, such as 3-6 of such belt side guides may be arranged at each side. In an embodiment, the belt side guide may comprise steel, in another embodiment, it may comprise aluminum or plastic, for example, "Werkstoff S", Nylon, etc.. In yet other embodiments, the belt side guide may comprise ceramics, glass, or combinations of the previously mentioned materials. In addition, embodiments may comprise a coating (such as a chromium or a DLC coating) and a thin fibrous material, such as Dyneema, aramid, Kevlar. Other materials are also not excluded.

Fig. 2 schematically depicts a side view of the embodiment depicted in top view in fig. 1 of a part of a conveyor belt assembly 1000 according to the invention. It clearly may be seen that the cylindrical surface of the guide roller 100 comprises three segments 1a, 1b and 1c each comprising at least substantially 120° of the circumference of the guide roller. In fig. 2, also the first reset element 2a, the first belt side guide 3a and a part of the conveyor belt 4 are depicted. Reset element 2a is shown transparent (for the sake of simplicity) to better illustrate the segmentation of the surface of the guiding roller.

The reset element 2 may comprise steel in an embodiment, in another embodiment, aluminum, and yet in another embodiment, a plastic material, such as Nylon, for example, or "Werkstoff S". Other materials are also not excluded. The selected material for both the reset element and the belt side guide usually depends on the material of the belt 4. In a specific embodiment of the belt conveyor assembly, the reset element comprises " Werkstoff S" and the belt side guide comprises steel ball bearings.

As a belt conveyor assembly 1000 according to the invention comprises a guide roller 100, then the segment 1 covered by the conveyer belt 4 will be displaced in the axial direction of the guide roller 100 as a result of lateral forces acting on the conveyor belt 4. When an axially displaced segment 1 however, no longer is covered by the conveyor belt 4, this segment 1 will be reset by one of the two reset elements 2a, 2b.

Figure 2 clearly shows that the arc of contact between the conveyor belt 4 and the guide roller (herein further also indicated as "arc of contact") comprises at least substantially 180°. The arc of contact in a belt conveyor assembly generally equals 180°. The invention, however, is also provided for an arc of contact being different from 180°. In the example shown, continuously two segments are located in the arc of contact, since each segment especially covers only about 120°. In the condition depicted schematically in fig. 2, segment 1a and 1c are in the arc of contact. Starting from this condition and successively rotating the guide roller counterclockwise will arrange segment 1b in the arc of contact. In the case of an inclination of the guide roller, segment 1b will displace axially as soon as it contacts the conveyor belt, thus as soon as it ends up in the so-called nip. Once a segment has left the arc of contact, the segment should be reset to the original center position. An axially displaced segment 1 will return to the starting position by itself during operation; this being accomplished by the reset elements 2 that may be attached to the frame 110 of the belt conveyor assembly 1000 directly, but also, for example to a bracket which in turn is in connection with the frame 110 for example, see fig. 4. To reset a segment that is displaced axially to the outside, the reset element comprises an inflected or curved part, facing away from the center of the guide roller in axial direction. Upon rotation of a roller comprising an axially displaced segment leaving the arc of contact, the front side of the segment is caught by the outwardly inflected or curved part of a reset element and the segment 1 is pushed back to the original starting position, the middle position, by further rotation of the guide roller 100. The reset elements, 2a and 2b, respectively, are positioned so that a segment can only contact a reset element when the segment has completely left the arc of contact. The inflection of the reset element, therefore in this embodiment is located at most at 60° before the place where the belt contacts the segments (the beginning of the arc of contact or nip). In other embodiments, the reset element, especially, may be arranged at a different location, for example at a maximum of 100°, such as at a maximum of 90°, as a maximum of 80°. The location of the reset elements is, especially, selected so that the segment being reset at the time of resetting is as little as possible, especially not at all, affected by friction, for example, of a belt. When the guide roller continues to rotate, axial movement of the segment is not possible during the first 60 degrees rotation of the segment, since it will be prevented by the second part of the segment that also comprises 60 degrees and still slides along a reset element. The second part of the segment will have passed the reset element, when the segment is rotated another 60 degrees, after which the segment may move axially again. Not being able to move axially during the rotation about the first 60 degrees results in a large frictional force between the conveyor belt and the relevant segment, which again results in a large lateral force to the conveyor belt and the side guide of the conveyor belt. Thin belts and paper webs will bend upward under such circumstances and creep over the side frame of the belt. This leads to damage and breakage. A resulting short life span, and the need for premature replacement of conveyor belts may involve high costs. The present invention comprises a solution to this problem.

This solution will be explained with reference to Figs. 3a, 3b and 3c. Fig. 3a schematically depicts a top view of an embodiment of a part of a conveyor belt assembly comprising a segmented guide roller and reset elements, wherein the axially movable segments are rectangular (as viewed in a flat plane). The rotation plane is perpendicular to the guide roller axle (here for the sake of clarity not shown) and is indicated by reference R. By the use of a guide roller with segments having a rectangular shape in conjunction with the inflected strip-shaped reset elements, the above described wear and / or fracture problems may arise. The present invention relates to an improved belt conveyor assembly, including a conveyer belt guide roller with axially displaceable segments, wherein the segments, relative to the direction of rotation of the guide roller, to the rear end on either side are obliquely angled, or beveled. Such a segment will further also be referred to as a "segment with oblique angles" or a "beveled segment". Fig. 3b schematically depicts a top view of an embodiment of such a belt conveyor assembly according to the invention with beveled segments.

Although the invention provides for a virtually unlimited number of ways in which a given segment may be obliquely angled, a preferred embodiment comprises a beveled segment, wherein the segment is beveled over about half of the segment and the angle is at least substantially 60 degrees. In this preferred embodiment, the beveled parts at both ends of the segment are substantially equal and the segments are therefore at least substantially symmetrical with respect to an axis perpendicular to the axial direction of the guide roller.

In yet another preferred embodiment, the non beveled part length (in the circumferential direction of the segment) of the segment is clearly shorter than the beveled part length. In proportion, this may, for example, be 30% : 70%. Such a configuration may be combined with a reset element of which the straight part is longer than in the preferred embodiment already described above, in which the proportion is about 50% : 50%. The exact values for the length of the beveled part may depend among other things on the dimensions (e.g. length of the straight part) and positions of the reset elements.

In this respect there are more degrees of freedom in the design. It should also be added that also providing beveling at 2 sides of the segment is possible. Optionally this may comprise two beveled sections (per segment side) that meet exactly at one point (the point of the maximum segment width). But this also may be two beveled sections on both sides (in the circumferential direction) of a straight section of the segment. The maximum segment width is then at the location of the straight section. Again, the selected configuration may depend, among other things, on the exact dimensions and position of the reset elements. A segment provided with two beveled sections at both sides may be used for rollers that are used alternately in two directions of rotation (this situation, however, being rather exceptional). In that case, in a preferred embodiment the reset element may be located substantially halfway of the arc of non-contact (where the arc of non-contact refers to the part of the roller surface not making part of the arc of contact).

The required / desired amount of beveling is dependent upon the tilt of the drive roller and/or reversing roller of a conveyor belt assembly. The greater the tilt the larger the beveling may have to be. In practice it appears, also depending on the diameter of the guide roller, and assuming that the drive and reversing rollers, and any other rollers (such as, for example, support rollers) are mounted in parallel in the best possible way, that the shortening at both ends of a rear axial side of a segment being in the range of 1 to 2 mm often already provides the intended effect. In addition to the beveled segments depicted in fig. 3b, the invention comprises also embodiments in which the segments for example comprise a stepped taper, or otherwise achieved tapering, instead of the beveled configuration as shown in figure 3b. The previously introduced terms beveled segment, segment with bevel, or segment with oblique angles comprise any form of constriction applicable for the intended purpose.

Fig. 3c schematically depicts a top view of the assembly shown in fig. 3b in which the guide roller is rotated slightly further with respect to the position shown in fig. 3b. Because of the beveling, the position of the segment may be further to the left without contacting the reset element.

The segments therefore, (in this embodiment) comprise a maximum width W and a minimum width (at one end of the oblique angle, i.e., at an edge of a segment), which is denoted by reference W1. The minimum width W1 will be especially in a range of 0.05-5% less than the maximum width W.

With respect to the belt side guide, the invention also comprises an improvement over conveyor assemblies according to the state of the art as described in the patent NL9402031. The belt side guides known from this patent typically comprise smooth pins arranged at either side of the conveyor belt at a location where the conveyer belt is running essentially straight (horizontal). A disadvantage of such belt side guides is the fact that they cause wear of the belt. In addition, the energy consumption by using these belt side guides is higher as a result of the friction between the belt and the pins.

The present invention comprises in an embodiment a belt side guide that comprises in an embodiment a bearing comprised cylinder. In a preferred embodiment, the cylinder bearing comprises a ball bearing. However, if such belt side guide is placed next to the conveyor belt in a straight part of the conveyor belt, the conveyor belt will also bend upward against the cylinder of the belt side guide and finally slide over the cylinder. Accordingly, the invention provides herein by arranging the cylinders of the belt side guide, also referred to as side guide cylinders, next to a curved part of the conveyor belt, for example, next to the (by the conveyor belt) covered arc of the guide roller, i.e., the arc of contact. Fig. 2 and Fig. 3a, 3b and 3c illustrate this positioning. It should be noted that it may be advantageous to provide multiple pairs of belt side guides, such as 2 to 6, or 2-4, or possibly 2-3 pairs belt side guides (guiding cylinders) 3 (distributed for instance over the length of the arc of contact). For clarity reasons, in the embodiments shown in most of the figures (with the exception of the embodiment shown in fig. 8) only a single pair of belt side guides 3 schematically is depicted and the belt side guide is arranged at a location substantially halfway of the arc of contact. The invention, however, also provides embodiments wherein the belt side guides 3 may be positioned at any point next to a curved part of the conveyor belt. To enable positioning the belt side guides this way, the conveyor belt 4 must be a few millimeters wider than the segments 1 of the guide roller 100. It should be noted that in this embodiment, the belt side guides 3a and 3b, especially, are spaced further apart than the reset elements 2a and 2b (the mutual shortest distance between the belt side guides is greater than between the reset elements).

In an embodiment, the width of the conveyor belt is selected such that at both face sides of the guide roller it extends about 1.5 mm from the segments. The conveyor belt is in this embodiment, therefore, 3 mm wider than the segments. An additional advantage of a conveyor belt being wider than the segments relates to avoiding the segments to get dirty. Thus, in an embodiment, the segments may be narrower than the intended conveyor belt, such as 0.05-2% narrower than the intended width of the intended conveyor belt. However, segments being more narrow, with respect to the width of the conveyor belt width, are also possible, for example, being 10% narrower, depending, among other things on the stiffness of the belt.

A curved thin belt or paper web may resist bending in a direction perpendicular to the bending (curved) direction. By arranging the belt side guides in the curve this property of thin strip material, or paper may advantageously be used.

The invention further provides that the bearing cylinders are connected to the frame 110 of the belt conveyor assembly 1000. They, however, may also be arranged at other locations, such as at the outside of a bracket or the inside of a bracket 10, as shown in fig. 4. In embodiments, this configuration is not rigid, but for example by means of a spring-loaded element, such as a spring-loaded wire or strip or a block comprising a coil spring. In the embodiment shown schematically in fig. 8 an example of this is given. In fig. 8, the belt side guide, in this embodiment especially the two belt side guides 3, are fastened to a spring-loaded element 70, especially a leaf spring, which can be connected via a connecting element 75 to the frame. Especially with stiffer and thicker conveyor belt materials (such as (thick) steel belts), it may be advantageous if the mounting comprises a spring-loaded element 70. In yet another embodiment, the belt side guide comprises only spring-loaded and sliding parts and no rolling elements, such as a spring-loaded strip, a stationary block having a specific form (such as a beveled, a parabolic, a step-wise profile, etc.), a (spring-loaded or not spring-loaded) non-rotating pin, etc.. The present invention comprises embodiments wherein the axial slots between the segments of the guide roller are sealed with a material that substantially not affects the mutual sliding of the segments, in order to prevent ingress of dirt into the guide roller. The seal may comprise, for example, flexible closed cell foam.

Fig. 4 schematically depicts an embodiment of the segmented guide roller 100, more especially a driving roller, according to the invention. Fig. 5 schematically depicts an embodiment of a part of a (second) guide roller according to the invention, especially applicable as a reversing roller 200. The two types of guide rollers are substantially equal with respect to the way in which the segments are incorporated in the roller. Hence the following description applies for both types of guide rollers 100, 200.

As already mentioned in detail, the guide roller according to the invention preferably comprises only three segments. In almost all conveyor systems the arc of contact comprises 180 degrees. Therefore, three segments may be sufficient, having a favorable effect on the cost of the guide roller. (Embodiments with two segments may also be applied preferably if the arc of contact is much smaller than 180 degrees.) When using a roller together with segments, each comprising an arc of substantially 120 degrees, the resistance of the segments against deflection is much greater than that of narrower segments of guide rollers with more than three segments. In a preferred embodiment, each segment 1 is configured from a curved stainless steel shell having a wall thickness of for example 2 mm. On the inner side, the concave side of each segment, two guide blocks 11 are arranged, comprising at least one in axial direction extending bore hole; the guide blocks being aligned by means of a (hardened) shaft 5 (also called segment shaft) inserted into the continuous bores. Two ball bushing holders 8 (enclosed by the end bushings 29) are located at the guide roller axle 7, further also referred to herein as central axle 7, wherein the ball bushings 6 are pressed in blind holes arranged in each ball bushing holder. In embodiments comprising segments comprising only two guide blocks 11 configured movably along one hardened shaft 5 but axially fixated at the (hardened) shaft 5, the ball bushing holders only comprise three blind holes with ball bushings, one ball bushing for each end of each (hardened) shaft 5. However, in a specific embodiment, each guide block 11 comprises two parallel in axial direction extending bore holes so that each segment may be axially movably incorporated in the guide roller by means of two parallel hardened shafts 5 (and subsequently to be fixated to these shafts by means of, for example, a locking ring 28 arranged next to the guide blocks 11), without being able to tip over, as is the case when using only one hardened shaft per segment. In this preferred embodiment, the ball bushing holders 8 each comprise, therefore, six blind holes with ball bushings 6. The invention provides that the ball bushings may be sealed by means of rings or cuffs made of rubber or foam rubber or by means of bellows arranged at the hardened shafts 5 (not shown in Figures 4 and 5, but, for example in fig. 6a with reference 50), provided that the required force for pressing these elements is small.

Hence, the guide roller 100, especially comprises at least two shafts, such as nx2 shafts, where n is the number of segments, wherein the segments can move parallel to said shafts and are connected to these shafts. Especially, each segment is connected to two shafts. These shafts being arranged substantially parallel to the guide roller axle.

The ball bushing holders 8 in one embodiment, have an abutment on the central shaft in the form of dowel pins 27. The axial displacement of the segments (by the hardened shafts 5) can be limited by means of socket screws 9 in the bottom of the ball bushing blind holes 6. In the embodiment depicted in fig. 4 the roller is suspended in a bracket 10 comprising ball bearings with a retaining ring. The belt side guides 3 and the reset elements 2 in this embodiment are connected for example by screws, to the inside of the bracket. Especially, in a embodiment, the (hardened) shafts 5 are fixated in the guide blocks 11 such that the (hardened) shafts never translate with respect to the guide blocks; such as, for example, via washers 28 as shown in fig. 4; however this may also be accomplished in other ways. A segment 1 with corresponding guide blocks 11 and shafts 5, in this embodiment, appears to be a fixed assembly, the assembly being axially displaceable in the ball bushings 6. Hence, the socket screws 9 may directly limit the axial displacement of the ball bushing shafts (the "hardened shafts"). Because the segments are not axially movable with respect to the shafts, these screws, thus, limit automatically and to the same extent, the axial displacement of the segments.

The above-mentioned socket screw 9 also provides an advantage for transport of the conveyor belt assembly 1000 by fastening the socket screws completely and thus fixating the segments 1 laterally, in order to protect the guide roller 100. The socket screws 9, further may be used for installation of the guide roller 100 in the belt conveyor assembly 1000, to position the segments 1 laterally exactly in the desired (center) position of the roller, and successively tighten the belt around the roller. This way one may be ascertained that the segments laterally may make the same stroke to both sides.

In preferred embodiments, the ball bushings 6 do not comprise sealing rings and do not contain fat or oil. In this way, the internal friction is reduced and, therefore, the lateral force on the belt is reduced. Because of these measures it is possible to guide very thin steel, plastic, and paper webs or sheets, whereas also thick steel and plastic belts may be guided. As mentioned above, the ball bushing holders 8 may comprise a stop 27 configured at the central shaft 7. Dowel pins 27 configured as this stop may be applied in the driving roller, however not in the reversing roller (see figs. 4 and 5). Especially, in the driving roller, the central axle 7 also rotates, because, the axle 7, for example, is driven by a motor via a belt / chain. In the driving roller, the ball bushing holder 8 thus, especially, always rotates along with the central axle. Hence one may apply, such dowel pins 27 for fixation, both in the direction of rotation as the circumferential direction.

It can be seen in fig. 5, that the ball bushing holder 8 is configured at the central axle 7 of the second guide roller or the reversing roller 200, by means of ball bearings 30. In this figure, an embodiment of the reversing roller 200 is depicted wherein the central axle does not rotate but is stationary with respect to the frame. This way, less space is required by the frame. The ball bushing holder 8, and the other rotating parts such as the segments 1, thus all rotate together relatively to the central axle 7, via the ball bearings. These ball bearings maintain the location of the ball bushing holders in axial direction. Hence, no dowel pins are used in this case.

In addition, embodiments of the invention have advantageous applications as a support roll. A conveyor belt or a web of material (such as paper) is mostly transported at only one side of a support roll. The contact with the conveyor belt is thus much smaller than with a driving roller and a reversing roller, respectively from a few up to a maximum of 90 degrees of the rotation of the roller compared to approximately 180 degrees. It may therefore be advantageous to provide this support roller with only 2 segments (of approximately 180 degrees) instead of 3 (or more) segments, such as described above, still guiding the conveyor belt properly without moving out of the roller.

It is noted that a reversing roller and a support roller are especially driven by the conveyor belt itself. Whereas a driving roller drives the conveyor belt. A driving roller and a reversing roller according to the invention are not necessarily both required in the belt conveyor assembly according to the invention; the guide roller according to the invention may also be advantageously used in a so-called knife-edge belt assembly, wherein the guide roller is configured as driving roller.

In a specific embodiment, a segment 1 of the guide roller 100, see figs. 6a and 6b, comprises a (extruded) curved segment (with a width W) and the guide blocks are especially configured as guide profiles 111 being an integral part of the segment, and configured to fixate the hardened shafts 5 in the profiles, such as with a pin 113 or screw. In addition, the (extruded) segment 1 located at the concave side of the segment in a direction parallel to the guide roller axle 7 comprises a ridge or elevation 40 at the side of the segment facing the guide roller axle 7 over a part of the width or the complete width of the segment. In this embodiment, the elevation, herein also referred to as "ridge", or "ridge element" 40 is used for resetting the segment 1. The reset element 2a, 2b, which may optionally be partly arranged inside the guide roller, may guide the ridge element, and thus the complete segment to the middle position, especially a segment 1 not arranged in the middle position. When using the ridge element, above-mentioned beveled segment is not required, however, may, if desired, also still be used. In an embodiment, the ridge 40 is beveled, in another embodiment, the reset element 2 is beveled (or inflected, or at an angle), and yet in another embodiment, both the ridge element 40 and the reset element 2 are beveled.

With respect to the embodiment of fig. 6b (the cross-section of figure 6a)-however the same may be applied in other embodiments-it is noted that each segment 1 comprises a pair of guide profiles 111 each comprising an opening for the (hardened) shafts 5, wherein one profile, over at least a part of its length, does not have a fully circular cross-section, and one has a substantially fully circular cross-section along the complete length. So each (extrusion) segment 1 comprises a circular hole 116 and a non-circular hole 115, called a slotted or elongated hole. With extrusion, such a slotted hole may be extruded during the extrusion of the segment. The diameter is deliberately designed not to be round. This is especially an elongated hole with the long direction in the tangential direction of the roller 100. In the radial direction, the hole 115 exactly fits the ball bushing shaft 5 (comparable to the round hole 116, however that being a 360° match (minus the recess that is required for the extrusion process.) The elongated hole is necessary for tolerance compensation of the assembly.

In Fig. 8 schematically some elements of the invention are depicted. This embodiment comprises three segments 1a, 1b, and 1c, each provided with a ridge 40. In operation, the segments rotate against the direction of the clock. In the pictured case, segment 1b will be the first segment to be reset since it is just leaving the arc of contact. When the segment 1b is in an eccentric position, and the ridge 40 rotates along reset element 2, the ridge will contact the reset element 2 via a contact surface and the reset element 2 will displace the entire segment 1b to the center position. The term "along" can therefore also comprise a physical contact. Preferably, the reset element 2 comprises an angle with respect to the plane of rotation or the ridge 40 comprises an angle with respect to the plane of rotation, thereby preventing that the element 1b hits the reset element 2 in a hard way at the moment of contact; but merely enabling a gentle push in the desired direction. Furthermore, in the figure, two belt side guides 3 are incorporated in the arc of contact. Also, both the reset element 2 and the belt side guides 3 are connected by spring-loaded elements 71 and 70 to the belt conveyor assembly via connecting element 75.

Figures 10a and 10b schematically depict some embodiments of the guide roller 100 according to the invention, wherein the belt side guide 3 and the reset elements 2 and the belt 4 are not shown to give a better overview. In this embodiment (in contrast to the embodiments shown in Figures 4, 5 and 6), the ball bushings 6 are arranged in the ball bushing holders 8, wherein the ball bushing holders 8 are connected to the concave side of the segment. In a 3-segments roller 100 and for the rollers in the Figures 10a and 10b, this implicates that these comprise 2x3 ball bushing holders 8 (3 on the left, 3 on the right). In the example as shown in Figure 10a the ball bushing holder 8 is connected to segment 1a by means of a weld 83. In doing so, the ball bushing shaft 5 comprises a continuous length wherein the distance between a first and a second end disc 80 is bridged, and a fixation to these end discs is possible. Ball bushing shaft 5 is thereby fixated in end disc 80 with an end disc fixation element 82, for example, a bolt, but also other means can be used, such as retaining rings, adjusting rings, pins, adhesives or welding. The end disc 80 is in the axial direction of the guide roller axle 7 as well as in the roller circumference direction fixated with respect to axle 7 via an axle fixation element 81. Also for this fixation, means may comprise locking rings, pins, gluing and welding. In the embodiment as shown in Figure 10a the ball bushing shafts 5, thus do not translate in the direction of the guide roller axle 7 during (roller) operation, the ball bushings, moreover always translate together with the ball bushing holders 8 and segment 1. This embodiment advantageously may be combined with embodiments comprising extruded segments 1 as well as with embodiments not comprising the extruded segments. In embodiments comprising extruded segments, especially, the ball bushing holders may together with the segments (i.e. as a single element or ensemble) be manufactured by means of extrusion (aluminum extrusion).

The embodiment shown schematically in Figure 10b comprises shorter ball bushing shafts 5 in relation to the embodiment according to Figure 10a, that do not create a direct connection between the two (left and right) end discs 80. For an equal number of ball bushings 6 as pictured in Figure 10a thus twice as many ball bushing shafts 5 are required. The end discs 80 (together with the ball bushing shaft 5) may be held in place by using an adjustment ring 84 which is clamped on the central axis 7, next to the end disc 80 (at the outside). This is just one example measure; the same result may also be achieved using other fastening methods, such as by using washers, pins, welding, or gluing. In the example given in Figure 10b the ball bushing holders 8 are connected to the concave side of the segments 1 by means of a weld 83. In another embodiment, this connection is realized in a different way, such as by means of bolts. In another embodiment, the ball bushing holder 8, and the segment 1 are produced as one element by the (aluminum) extrusion. The ball bushing shafts 5 are fixated in the end discs 80 analogous to the embodiment in figure 10a. The end discs 80 are like in Figure 10a fixated by means of an axle fixation element 81 with respect to the central axle 7. The embodiments of the guide roller 100 shown schematically in Figures 10a and 10b may be configured as driving roller, reversing roller and support roller. Following material may especially be comprised by these different components (segments 1, ball bushing holders 8, guide blocks 11 end discs 80): (stainless) hardened or non-hardened steel, aluminum, plastic. Components such as the central axle 7, ball bushing shaft 5, ball bushings 6, different fixation elements like axle locking rings, pins and adjusting rings may especially comprise steel (both stainless and non-stainless, hardened or non-hardened).

A further distinctive feature of the belt conveyor assembly according to the invention relates to the ability to tension the conveyor belt by means of a reversing roller or tensioning roller which is engaged centrally by a force, for example, by means of a lever arrangement. An embodiment is shown schematically in fig. 9. This centrally acting force may be applied, for example, by a spring-loaded tensioner 63 or a spring balance, hereinafter also referred to as a tensioning means 63. Via an attachment element 62, coupled to the bracket 10, the guide roller 100 successively will move in the direction opposite to the applied force (F), wherein the total, more or less is tilted via the pivot point 61. In contrast to belt conveyors according to the prior art, wherein the conveyor belt is tensioned independently from each other at the left and right hand side (in most cases by adjusting the adjusting screws), in order to tune the running of the belt, may in the belt conveyor assembly according to the invention the reversing roller be held parallel during tensioning, thus keeping an equal tension over its complete width in the conveyor belt, allowing the roller being arranged substantially parallel to other rollers. For this, it is also advantageous that when using a spring balance (or spring-loaded means by measuring the length, or weights), the tension force is directly known, in contrast to the method in which adjusting screws may be used. This results in a better controllability of the level of tension force wherein the tension forces may be set lower, positively affecting the life span of various components. The material for the different components such as bracket 10 and attachment element 62 may, for example, comprise steel and aluminum.

The embodiments of (parts of) the belt conveyor assembly according to the invention discussed in this description and depicted in the figures, are only a few of the many possible embodiments within the scope of the invention as described in the appended claims and hence should be considered as non-limitative. The terms "substantial" and "substantially" herein, will be understood by those skilled in the art. The terms "substantially" and "substantial" may also comprise embodiments with "total", "complete", "all", etc.. Hence, in embodiments, the terms "substantially" and "substantial" may also be removed. Where applicable, the terms "substantial" and "substantially" may also relate to 90% or higher, such as 95% or higher, especially 99% or more, even more especially 99.5% or more, including 100%. The term "comprise" includes also embodiments wherein the term "comprising" "includes" or "comprises" means.
Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. The device or apparatus herein are amongst others described during operation. As will be clear to the person skilled in the art, the invention is not limited to methods of operation or devices in operation. It should be noted that the embodiments described herein illustrate the invention rather than limit the invention, and that those skilled in the art may be able to design (many) alternative embodiments without departing from the scope of the appended claims. It should be noted that in the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements.

## Claims

1. A belt conveyor assembly (1000) comprising a guide roller (100) comprising a roller surface and a roller axle (7), wherein the roller surface is composed of a number of axially movable segments (1), distributed over the circumference of the roller surface and secured from rotating around the roller axle (7), wherein the belt conveyor assembly (1000) comprises reset elements (2a, 2b), wherein the reset elements (2a, 2b) are configured to reset an axially displaced segment (1) and return it to a central position, **characterized in that** the guide roller (100) comprises a number of shafts (5), wherein each segment (1) of the guide roller (100) is connected to two or more shafts (5), wherein the guide roller (100) comprises ball bushings (6) for engaging the shafts (5), and wherein the shafts (5) are arranged parallel to the roller axle (7).

2. The belt conveyor assembly according to claim 1, wherein the reset elements (2a, 2b) comprise an inflected or a curved strip, and wherein the reset elements (2a, 2b) are arranged outside of the guide roller (100).

3. The belt conveyor assembly (1000) according to any one of the preceding claims, wherein (a) the segments (1) comprise at least a first length (w) and a second length (w1) in axial direction, wherein the first length (w) is larger than the second length (w1), and wherein the reset elements (2a, 2b) are arranged outside of the guide roller (100), and/or (b) the belt conveyor assembly comprises a guide roller (100) comprising three obliquely angled segments (1), wherein the reset elements (2a, 2b) are arranged outside of the guide roller (100).

4. The belt conveyor assembly (1000) according to any one of the preceding claims, wherein the belt conveyor assembly comprises a guide roller (100) with three segments (1a, 1b, 1c), wherein the three segments (1) each substantially comprise one third part of the circumference and the surface of the guide roller (100), and wherein the reset elements (2a, 2b) are arranged outside of the guide roller (100).

5. The belt conveyor assembly (1000) according to any of the preceding claims, wherein (i) the belt conveyor assembly comprises a cylinder configured as conveyer belt side guides (3a, 3b), wherein the cylinder comprises a bearing, wherein the cylinder is rotatable around an axis substantially perpendicular to the surface of the conveyer belt, and wherein the bearing of the cylinder comprises a ball bearing, and/or (ii) the belt conveyor assembly comprises spring-loaded strips, arranged substantially perpendicular to the surface of the conveyor belt, configured as conveyer belt side guides (3a, 3b), and/or (iii) the belt conveyor assembly comprises non-rotatable pins arranged substantially perpendicular to the surface of the conveyor belt, configured as conveyer belt side guides (3a, 3b).

6. The belt conveyor assembly (1000) according to claim 5, wherein the conveyer belt side guides (3a, 3b) further comprise spring-loaded elements.

7. The belt conveyor assembly according to any one of the preceding claims 5-6, wherein the conveyer belt side guides (3a, 3b) are located at both sides of a curved section of the conveyor belt, and wherein the conveyer belt side guides (3a, 3b) are arranged at the location of the arc of contact of the guide roller at both sides of the conveyor belt.

8. The belt conveyor assembly according to any one of the preceding claims, wherein each segment (1) of the guide roller (100) comprises one or more to the concave side of the segment (1) immovably connected guide blocks (11) provided with one or more in axial direction extending bore holes, wherein the segment is axially movably incorporated in the guide roller by means of one or more hardened shafts (5) arranged in the one or more in axial direction extending bore holes in the one or more guide blocks, and wherein each guide block (11) comprises two mutually parallel in axial direction extending bore holes, and each segment is movably incorporated in the guide roller (100) by two hardened shafts (5).

9. The belt conveyor assembly according to any one of the preceding claims, wherein the belt conveyor assembly (1000) comprises a tensioning device centrally engaging a guide roller, a tensioning roller, or a reversing roller (200), wherein the tensioning device comprises (a) a bracket and a lever mechanism and/or(b) a spring-loaded tensioner or a spring balance.

10. The belt conveyor assembly (1000) according to any one of the preceding claims, wherein the guide roller (100) comprises ball bushings (6) for engaging of the hardened shafts (5).

11. The belt conveyor assembly (1000) according to any of the preceding claims, further comprising a reversing roller (200) with a roller axle (7), wherein the roller surface is composed of a number of axially movable segments (1) distributed over the circumference of the roller surface, wherein the belt conveyor assembly comprises reset elements (2a, 2b) configured to reset a segment (1) of the reversing roller (200).

12. The belt conveyor assembly (1000) according to any of the preceding claims, wherein one or more segments (1) of the guide roller (100), comprise an aluminum extruded segment.

13. The belt conveyor assembly (1000) according to any of the preceding claims, wherein one or more segments (1) of the guide roller (100) comprise an element (40) over at least a part of the width of the segment (1) at the side of the segment facing the roller axle (7) and directed towards the roller axle (7), wherein the reset elements (2a, 2b) and the element (40) are configured to reset the segment (1) when the element (40) rotates along the reset elements (2a, 2b).

14. The belt conveyor assembly (1000) according to any of the preceding claims, wherein the reset elements (2a, 2b) and the segments (1) are configured to provide in a first condition the reset elements (2a, 2b) and the segment (1) not contacting each other, and in a second condition one of the reset elements (2a, 2b) and the segment (1) contacting each other, and wherein from one condition to the other condition is switched by rotation of the guide roller (100) around the roller axle (7).

15. The belt conveyor assembly (1000) according to claims 13 and 14, wherein in the second condition said one of the reset elements (2a, 2b) only touches the element (40), wherein in the second condition, said one of the reset elements (2a, 2b), or the element (40), or both said one of the reset elements (2a, 2b) and the element (40) comprise a contact surface comprising an angle larger than 0° and smaller than 180° degrees relative to a plane of rotation, and, wherein in the second condition, said one of the reset element (2a, 2b), or the element (40), or both said one of the reset element (2a, 2b) and the element (40) comprise a contact surface comprising an angle larger than 0° and smaller than 180° degrees relative to a plane through the guide roller axle (7).

16. The belt conveyor assembly (1000) according to any of the preceding claims 5-15, wherein the reset elements (2a, 2b) are at least partially arranged inside the guide roller (100), and wherein the conveyor belt comprises a web of paper, plastic, fabric, or steel.

## Patentansprüche

1. Bandfördereranordnung (1000) umfassend eine Führungsrolle (100), die eine Rollenoberfläche und eine Rollenachse (7) aufweist, wobei die Rollenoberfläche aus einer Anzahl von axial bewegbaren Segmenten (1) besteht, die über den Umfang der Rolle verteilt und drehfest um die Rollenachse (7) angeordnet sind, wobei die Bandfördereranordnung (1000) Rückstellelemente (2a, 2b) aufweist, wobei die Rückstellelemente (2a, 2b) zu dem Zurücksetzen eines axial versetzten Segments (1) ausgebildet sind und es in eine zentrale Position zurückführen, **dadurch gekennzeichnet, dass** die Führungsrolle (100) eine Anzahl von Wellen (5) aufweist, wobei jedes Segment (1) der Führungsrolle (100) mit zwei oder mehreren Wellen (5) verbunden ist, wobei die Führungsrolle (100) Kugelbuchsen (6) zu dem Eingreifen der Wellen (5) aufweist, und wobei die Wellen (5) parallel zur Rollenachse (7) angeordnet sind.

2. Bandfördereranordnung nach Anspruch 1, wobei die Rückstellelemente (2a, 2b) einen eingebogenen oder gebogenen Streifen umfassen und wobei die Rückstellelemente (2a, 2b) außerhalb der Führungsrolle (100) angeordnet sind.

3. Bandfördereranordnung (1000) nach einem der vorstehenden Ansprüche, wobei (a) die Segmente (1) in axialer Richtung mindestens eine erste Länge (w) und eine zweite Länge (w1) umfassen, wobei die die erste Länge (w) größer als die zweite Länge (w1) ist, und wobei die Rückstellelemente (2a, 2b) außerhalb der Führungsrolle (100) angeordnet sind und / oder (b) die Bandfördereranordnung eine Führungsrolle (100) mit drei schräg abgewinkelten Segmenten (1) aufweist, wobei die Rückstellelemente (2a, 2b) außerhalb der Führungsrolle (100) angeordnet sind.

4. Bandfördereranordnung (1000) nach einem der vorstehenden Ansprüche, wobei die Bandförderanordnung eine Führungsrolle (100) mit drei Segmenten (1a, 1b, 1c) umfasst, wobei die drei Segmente (1) jeweils in dem Wesentlichen einen Drittel des Umfangs und der Oberfläche der Führungsrolle (100) umfassen, und wobei die Rückstellelemente (2a, 2b) außerhalb der Führungsrolle (100) angeordnet sind.

5. Bandfördereranordnung (1000) nach einem der vorstehenden Ansprüche, wobei (i) die Bandfördereranordnung einen als Förderbandseitenführung (3a, 3b) ausgebildeten Zylinder aufweist, wobei der Zylinder ein Lager aufweist, wobei der Zylinder um eine in dem Wesentlichen senkrecht zu der Förderbandoberfläche angeordneten Achse drehbar ist, und wobei das Lager des Zylinders ein Kugellager umfasst, und / oder (ii) die Bandfördereranordnung federbelastete Streifen umfasst, die in dem Wesentlichen senkrecht zu der Förderbandoberfläche angeordnet sind als Förderbandseitenführungen (3a, 3b) ausgebildet sind und / oder (iii) die Bandfördereranordnung in dem Wesentlichen senkrecht zur Förderbandoberfläche angeordnete, nicht drehbare Zapfen umfasst, die als Förderbandseitenführungen (3a , 3b) ausgebildet sind.

6. Bandfördereranordnung (1000) nach Anspruch 5, wobei die Förderbandseitenführungen (3a, 3b) weiter federbelastete Elemente umfassen.

7. Bandfördereranordnung nach einem der vorstehenden Ansprüche 5-6, wobei die Förderbandseitenführungen (3a, 3b) auf beiden Seiten eines gebogenen Abschnitts des Förderbands angeordnet sind, und wobei die Förderbandseitenführungen (3a, 3b) an der Stelle des Kontaktbogens der Führungsrolle an beiden Seiten des Förderbandes angeordnet sind.

8. Bandfördereranordnung nach einem der vorstehenden Ansprüche, wobei jedes Segment (1) der Führungsrolle (100) einen oder mehrere, mit der konkaven Seite des Segmentes (1) unbeweglich verbundene Führungsblöcke (11) aufweist, die mit einer oder mehreren in axialer Richtung verlaufenden Bohrungen ausgestattet sind, wobei das Segment in der Führungsrolle mittels einer oder mehrerer gehärteten Wellen (5) axial verschiebbar in der einen oder den mehreren in axialer Richtung verlaufenden Bohrungen in dem einen oder den mehreren Führungsblöcken aufgenommen ist, und wobei jeder Führungsblock (11) zwei in axialer Richtung parallel zueinander verlaufende Bohrungen aufweist, und jedes Segment in der Führungsrolle (100) durch zwei gehärtete Wellen (5) beweglich aufgenommen ist.

9. Bandfördereranordnung nach einem der vorstehenden Ansprüche, wobei die Bandfördereranordnung (1000) eine Spannvorrichtung umfasst, die mit einer Führungsrolle, einer Spannrolle oder einer Umlenkrolle (200) zentrisch in Eingriff steht, wobei die Spannvorrichtung (a) einen Bügel und einen Hebelmechanismus und/oder (b) einen federbelasteten Spanner oder eine Federwaage umfasst.

10. Bandfördereranordnung (1000) nach einem der vorstehenden Ansprüche, wobei die Führungsrolle (100) Kugelbuchsen (6) zu dem Eingreifen der gehärteten Wellen (5) aufweist.

11. Bandfördereranordnung (1000) nach einem der vorstehenden Ansprüche, weiter umfassend eine Umlenkrolle (200) mit einer Rollenachse (7), wobei die Rollenoberfläche aus einer Anzahl von axial bewegbaren Segmenten (1) besteht, die über den Umfang der Rollenoberfläche verteilt sind, wobei die Bandförderanordnung Rückstellelemente (2a, 2b) aufweist, die zu dem Zurücksetzen eines Segments (1) der Umlenkrolle (200) konfiguriert sind.

12. Bandfördereranordnung (1000) nach einem der vorstehenden Ansprüche, wobei ein oder mehrere Segmente (1) der Führungsrolle (100) ein extrudiertes Aluminiumsegment umfassen.

13. Bandfördereranordnung (1000) nach einem der vorstehenden Ansprüche, wobei ein oder mehrere Segmente (1) der Führungsrolle (100) ein Element (40) über zumindest einen Teil der Breite des Segments (1) an der der Rollenachse (7) zugewandten Seite und orientiert zu der Rollenachse (7) umfassen, wobei die Rückstellelemente (2a, 2b) und das Element (40) zu dem Zurücksetzen des Segments (1) ausgebildet sind, wenn das Element (40) sich entlang der Rückstellelemente (2a, 2b) dreht.

14. Bandfördereranordnung (1000) nach einem der vorstehenden Ansprüche, wobei die Rückstellelemente (2a, 2b) und die Segmente (1) so konfiguriert sind, dass in einem ersten Zustand die Rückstellelemente (2a, 2b) und das Segment (1) sich nicht berühren, und in einem zweiten Zustand eines der Rückstellelemente (2a, 2b) und das Segment (1) sich berühren und wobei durch Drehung der Führungsrolle (100) um die Rollenachse (7) von einem Zustand in den anderen Zustand umgeschaltet wird.

15. Bandfördereranordnung (1000) nach den Ansprüchen 13 und 14, wobei in dem zweiten Zustand das eine der Rückstellelemente (2a, 2b) nur das Element (40) berührt, wobei in dem zweiten Zustand eines der Rückstellelemente (2a, 2b) oder das Element (40) oder beide, sowohl eines der Rückstellelemente (2a, 2b) und das Element (40) eine Kontaktfläche umfassen, die einen Winkel größer als 0° Grad und kleiner als 180° Grad relativ zu einer Rotationsebene umfasst, und wobei in dem zweiten Zustand eines der Rückstellelemente (2a, 2b) oder das Element (40) oder beide, sowohl eines der Rückstellelemente (2a, 2b) und das Element (40) eine Kontaktfläche umfassen, die einen Winkel größer als 0° Grad und kleiner als 180° Grad relativ zu einer Ebene durch die Führungsrollenachse (7) umfasst.

16. Bandfördereranordnung (1000) nach einem der vorstehenden Ansprüche 5-15, wobei die Rückstellelemente (2a, 2b) zumindest teilweise innerhalb der Führungsrolle (100) angeordnet sind, und wobei das Förderband eine Bahn aus Papier, Kunststoff, Stoff oder Stahl aufweist.

## Revendications

1. Assemblage de transporteur à courroie (1000) comprenant un rouleau de guidage (100) comprenant une surface de rouleau et un axe de rouleau (7), dans lequel la surface de rouleau est composée d'un nombre de segments (1), mobiles axialement répartis sur la circonférence de la surface de rouleau et protégés contre la rotation autour de l'axe de rouleau (7), dans lequel l'assemblage de transporteur à courroie (1000) comprend des éléments de remise à zéro (2a, 2b), dans lequel les éléments de remise à zéro (2a, 2b) sont configurés pour remettre à zéro un segment (1) déplacé axialement et le retourner dans une position centrale, **caractérisé en ce que** le rouleau de guidage (100) comprend un nombre d'arbres (5), dans lequel chaque segment (1) du rouleau de guidage (100) est raccordé à deux ou plus arbres (5), dans lequel le rouleau de guidage (100) comprend des douilles à billes (6) pour mettre en prise les arbres (5), et dans lequel les arbres (5) sont agencés parallèlement à l'axe de rouleau (7).

2. Assemblage de transporteur à courroie selon la revendication 1, dans lequel les éléments de remise à zéro (2a, 2b) comprennent une bande infléchie ou courbée, et dans lequel les éléments de remise à zéro (2a, 2b) sont agencés en dehors du rouleau de guidage (100).

3. Assemblage de transporteur à courroie (1000) selon l'une quelconque des revendications précédentes, dans lequel (a) les segments (1) comprennent au moins une première longueur (w) et une seconde longueur (w1) dans la direction axiale, dans lequel la première longueur (w) est plus grande que la seconde longueur (w1), et dans lequel les éléments de remise à zéro (2a, 2b) sont agencés en dehors du rouleau de guidage (100), et/ou (b) l'assemblage de transporteur à courroie comprend un rouleau de guidage (100) comprenant trois segments (1) anglés obliquement, dans lequel les éléments de remise à zéro (2a, 2b) sont agencés en dehors du rouleau de guidage (100).

4. Assemblage de transporteur à courroie (1000) selon l'une quelconque des revendications précédentes, dans lequel l'assemblage de transporteur à courroie comprend un rouleau de guidage (100) avec trois segments (1a, 1b, 1c), dans lequel les trois segments (1) comprennent chacun sensiblement une troisième partie de la circonférence et la surface du rouleau de guidage (100), et dans lequel les éléments de remise à zéro (2a, 2b) sont agencés en dehors du rouleau de guidage (100).

5. Assemblage de transporteur à courroie (1000) selon l'une quelconque des revendications précédentes, dans lequel (i) l'assemblage de transporteur à courroie comprend un cylindre configuré comme guidages latéraux de transporteur à courroie (3a, 3b), dans lequel le cylindre comprend un palier, dans lequel le cylindre peut tourner autour d'un axe sensiblement perpendiculaire à la surface de la courroie du transporteur, et dans lequel le palier du cylindre comprend un palier à billes, et/ou (ii) l'assemblage de transporteur à courroie comprend des bandes chargées sur ressort, agencées sensiblement perpendiculairement à la surface de la courroie du transporteur, configurées comme guidages latéraux de transporteur à courroie (3a, 3b), et/ou (iii) l'assemblage de transporteur à courroie comprend des axes non rotatifs agencés sensiblement perpendiculairement à la surface de la courroie du transporteur, configurés comme guidages latéraux de transporteur à courroie (3a, 3b).

6. Assemblage de transporteur à courroie (1000) selon la revendication 5, dans lequel les guidages latéraux de transporteur à courroie (3a, 3b) comprennent en outre des éléments chargés sur ressort.

7. Assemblage de transporteur à courroie selon l'une quelconque des revendications précédentes 5 à 6, dans lequel les guidages latéraux de transporteur à courroie (3a, 3b) sont situés sur les deux côtés d'une section courbée de la courroie du transporteur, et dans lequel les guidages latéraux de transporteur à courroie (3a, 3b) sont agencés sur l'emplacement de l'arc de contact du rouleau de guidage sur les deux côtés de la courroie du transporteur.

8. Assemblage de transporteur à courroie selon l'une quelconque des revendications précédentes, dans lequel chaque segment (1) du rouleau de guidage (100) comprend un ou plusieurs blocs de guidage (11) raccordés de manière immobile au côté concave du segment (1) dotés d'un ou de plusieurs trous de forage s'étendant dans la direction axiale, dans lequel le segment est incorporé de manière axialement mobile dans le rouleau de guidage au moyen d'un ou de plusieurs arbres trempés (5) agencés dans l'un ou les plusieurs trous de forage s'étendant dans la direction axiale dans l'un ou les plusieurs blocs de guidage, et dans lequel chaque bloc de guidage (11) comprend deux trous de forage s'étendant dans la direction axiale mutuellement parallèles, et chaque segment est incorporé de manière mobile dans le rouleau de guidage (100) par deux arbres trempés (5).

9. Assemblage de transporteur à courroie selon l'une quelconque des revendications précédentes, dans lequel l'assemblage de transporteur à courroie (1000) comprend un dispositif de mise sous tension mettant en prise centralement un rouleau de guidage, un rouleau de mise sous tension, ou un rouleau de renversement (200), dans lequel le dispositif de mise sous tension comprend (a) un support et un mécanisme de levier et/ou (b) un tensionneur chargé sur ressort ou une balance à ressort.

10. Assemblage de transporteur à courroie (1000) selon l'une quelconque des revendications précédentes, dans lequel le rouleau de guidage (100) comprend des douilles à billes (6) pour mettre en prise les arbres trempés (5).

11. Assemblage de transporteur à courroie (1000) selon l'une quelconque des revendications précédentes, comprenant en outre un rouleau de renversement (200) avec un axe de rouleau (7), dans lequel la surface de rouleau est composée d'un nombre de segments (1) mobiles axialement répartis sur la circonférence de la surface de rouleau, dans lequel l'assemblage de transporteur à courroie comprend des éléments de remise à zéro (2a, 2b) configurés pour remettre à zéro un segment (1) du rouleau de renversement (200).

12. Assemblage de transporteur à courroie (1000) selon l'une quelconque des revendications précédentes, dans lequel un ou plusieurs segments (1) du rouleau de guidage (100) comprennent un segment extrudé en aluminium.

13. Assemblage de transporteur à courroie (1000) selon l'une quelconque des revendications précédentes, dans lequel un ou plusieurs segments (1) du rouleau de guidage (100) comprennent un élément (40) sur au moins une partie de la largeur du segment (1) sur le côté du segment faisant face à l'axe de rouleau (7) et dirigé vers l'axe de rouleau (7), dans lequel les éléments de remise à zéro (2a, 2b) et l'élément (40) sont configurés pour remettre à zéro le segment (1) lorsque l'élément (40) tourne le long des éléments de remise à zéro (2a, 2b).

14. Assemblage de transporteur à courroie (1000) selon l'une quelconque des revendications précédentes, dans lequel les éléments de remise à zéro (2a, 2b) et les segments (1) sont configurés pour fournir dans un premier état les éléments de remise à zéro (2a, 2b) et le segment (1) ne se touchant pas les uns les autres, et dans un second état les éléments de remise à zéro (2a, 2b) et le segment (1) se touchant les uns les autres, et dans lequel le passage d'un état à l'autre état est commuté par rotation du rouleau de guidage (100) autour de l'axe de rouleau (7).

15. Assemblage de transporteur à courroie (1000) selon les revendications 13 et 14, dans lequel dans le second état ledit un des éléments de remise à zéro (2a, 2b) ne touche que l'élément (40), dans lequel dans le second état, ledit un des éléments de remise à zéro (2a, 2b), ou l'élément (40), ou à la fois ledit un des éléments de remise à zéro (2a, 2b) et l'élément (40) comprennent une surface de contact comprenant un angle supérieur à 0° et inférieur à 180° degrés par rapport à un plan de rotation, et dans lequel dans le second état, ledit un de l'élément de remise à zéro (2a, 2b) ou l'élément (40), ou à la fois ledit un de l'élément de remise à zéro (2a, 2b) et l'élément (40) comprennent une surface de contact comprenant un angle supérieur à 0° et inférieur à 180° degrés par rapport à un plan au travers de l'axe de rouleau de guidage (7).

16. Assemblage de transporteur à courroie (1000) selon l'une quelconque des revendications précédentes 5 à 15, dans lequel les éléments de remise à zéro (2a, 2b) sont agencés au moins partiellement dans le rouleau de guidage (100), et dans lequel la courroie du transporteur comprend une bande de papier, de plastique, de tissu ou d'acier.
